# EUROPEAN PATENT SPECIFICATION

(11) **EP 1 580 322 B1**
(45) Date of publication and mention of the grant of the patent: **18.05.2011**
(21) Application number: 05251730.7
(22) Date of filing: 22.03.2005
(51) Int. Cl.: E01H 1/12

(54) **Apparatus for removal and disposal of materials**
Vorrichtung zur Beseitigung und Entsorgung von Materialien
Dispositif pour enlever et éliminer des matériaux

(30) Priority: 25.03.2004 US 808841
(43) Date of publication of application: 28.09.2005
(73) Proprietor: Snow Solutions LLC, New Canaan, CT 06840 (US)
(72) Inventor: Noonan, Mark, New Canaan, CT 06840 (US)
(74) Representative: Freeman, Avi

(56) References cited:
- FR-A- 865 426
- US-A- 2 715 786
- US-A- 4 179 828
- US-A- 6 053 548

## Description

The present invention relates to a wheeled shovel.

In preferred embodiments, the present invention relates to apparatus and methods for removal and disposal of materials.

In preferred embodiments, the invention relates generally to manual wheeled vehicles for moving and disposing materials. In an embodiment, the present invention relates to a snow removal shovel on a wheel which provides a recoil action to assist in propelling the snow.

Numerous manual wheeled vehicles have been in use to assist in transporting materials from one place to another. The age old wheelbarrow is, of course, well known.

However, aside from transporting alone, loading onto and unloading of materials from a vehicle easily and with minimum stress and strain to the human body have required different approaches. This has been true for shoveling or plowing snow, including wet and heavy slushy snow.

In US Patent 5,918,921, Samuelson shows a levered shovel for moving snow. The shovel includes a blade for carrying the snow, a shaft that extends from the blade, a wheel assembly for contacting a horizontal surface and which depends from the shaft, and a handle assembly for gripping by the user and which is disposed on the rearmost end of the shaft. The wheel assembly comprises either an axle fork, an axle rotatively mounted to the axle fork, and a pair of wheels attached to the axle or an inverted T-shaped member with its transverse portion serving as its axle to which a pair of wheel are rotatively attached. The handle assembly comprises a lower transverse member for gripping by the hands of the user and extends laterally from both sides of the rearmost end of the shaft and an extender for elevating the point at which the user grips the handle assembly for users with limited bending posture.

Jurkowski, et al., disclose a wheeled snow shoveling device in US Patent 5,511,327. The shoveling device comprises a cart having a handle formed in a generally A-shaped configuration with a cross bar including a circular ring extending therefrom. The cart includes a wheel with an axle positioned at its axis, the wheel including a pair of vertical support bars affixed to the axle, the wheel also including a pair of horizontal braces affixed to its axle. The lower segment of the handle is coupled to the braces. A snow shovel has a blade formed as a generally rectangular shaped member and is molded into a semi circular configuration, the rear surface of the blade being coupled to the free ends of the horizontal braces of the cart wheel. The blade has a wooden shaft affixed to its rear surface, the shaft extending through the circular ring on the cross bar of the handle, the free ends of the vertical support bars being coupled to the shaft.

In another approach for removal of snow, Petruzzelli discloses in US Patent 6,675,507 an articulated shovel blade for pivoting movement relative to a wheeled carriage on which the blade is mounted. The shovel blade is adjustably locked in position at different angles relative to the direction of travel of the carriage, for pushing snow or other material to the side of the shovel as it travels across the ground. The carriage is pushed forward using a handle or a motor is provided for self-propelling the carriage.

In still another approach, Lobato describes in US Patent 5,581,915 a snowplow carriage assembly for removal of snow manually by plowing the snow in an area to be cleared of snow. The carriage is a manually propelled wheeled structure made of a plurality of members pivotally connected for collapsing and folding for storage and unfolding for use in supporting and transporting a snowplow in the form of a replaceable conventional snow shovel having a handle straight length portion. The carriage is configured so that the snow shovel handle is removably mounted thereon inclined from the horizontal defining an acute angle relative to a surface on which snow is being plowed. The snow shovel inclination is variable for establishing different acute angles of the shovel relative to the surface for plowing the snow thereon and removal therefrom.

In US Patent 6,643,958, Krejci discloses a snow throwing shovel device for removing snow from narrow sidewalks and from steps where a conventional snow blower cannot be used. The snow throwing shovel device includes a scoop assembly including a housing having top, bottom, side, and back walls, and also having an open front. The shovel also includes an elongate chute attached to the scoop through which snow is moved. The shovel further includes a discharge spout rotatably mounted to the elongate chute, handle members attached to the elongate chute; and an assembly for picking up snow and moving snow through the elongate chute.

The present state of prior of art, thus, generally provides two types of shovels which are particularly common. One type involves lifting and throwing of the snow, and the other involves pushing of the snow like plowing. These cited prior art references are incorporated by reference in their entirety. What is needed is a combination of the two types of snow shovels where the plowing type of action can be incorporated into a shovel which also lifts and throws the snow with ease and with least ergonomical discomfort.

US-A-6053548 discloses a manually-operable shovel for moving material, including a shovel blade, a shovel handle, a joint for attaching the shovel blade to the shovel handle, and an articulation device cooperating with the joint for permitting the operator to position the blade to a predetermined fixed angle in relation to the direction of blade movement for moving the material in a predetermined desired relation to the direction of blade movement.

US-A-4179828 discloses a multi-purpose handle-directed, manually propelled wheeled vehicle adapted for snow removal, load carrying, and similar labor saving tasks in rough and uncertain terrain. A frame having open lenticular shape in plan view houses a wheel centrally between a "T" handle at the rear end and a load lug at the front end to which snow blade, heavy broomrake and other implements attach. At each end also on the upper surface a load pickup station is provided which supports.a detachable bed or carrying body with drop-end and downwardly projecting legs providing, with the wheel, braked, non-tipping 3-point support when at rest.

US-A-2715786 discloses a snowplow incorporating means for guiding the snowplow and an adjustably mounted blade for deflecting snow.

According to a first aspect of the present invention, there is provided a wheeled shovel comprising a wheel assembly having an axle and a wheel; a frame having an upper portion, a lower portion, and a middle portion disposed generally between upper and lower portions of the frame, the middle portion adjacent the axle such that the axle is operable as a fulcrum about which the frame can pivot; a handle disposed at about the upper portion of the frame; and, a shovel blade disposed at about the lower portion of the frame, characterised in that said frame lower portion is lower than the axle when the shovel blade and wheel are on the same horizontal surface; the wheel has an outer diameter of between about 30 inches (approx. 76 cm) and 36 inches (approx. 91 cm) and, the wheel assembly, the frame, the handle, and the shovel blade are cooperatively configured so as to enable the wheeled shovel to throw snow generally upwardly and forwardly away from the shovel blade in response to a sufficient force applied to the handle for pivoting the frame relative to the axle with a recoil generated through the fulcrum at the axle.

In an embodiment, the present invention provides a wheeled shovel having a handle formed at the end of an elongate yoke, the yoke being mounted, near its middle portion, onto the axle of a relatively large wheel for the purposes of picking up of a load, transporting it to a destination, and propelling the load overboard with a quick body (or arm) motion on the part of a person operating the handle. The substantially waist-high wheel is adapted to receive the body force of an operator as an effective leverage through the handle and cause a recoil action from the wheel to enhance the throwing power of the apparatus of the invention, comprising the shovel, the wheel and the yoke as the driving member.

An embodiment of the present invention involves an apparatus for removing and disposing materials. The apparatus comprises a wheel assembly having a rim and an axle connected together with spokes radially projecting from the axle. The axle includes a fulcrum member capable of transmitting a recoil reaction to an action. A driving member has an upper portion, a middle portion and a lower portion. The middle portion is generally "S-shape" and is attached to the fulcrum member of the axle. A handle is attached to the upper portion of the driving member and is capable of moving the wheel assembly. A blade is attached to the lower portion of the driving member, the blade being adapted to pick up a load of material from a surface when the blade is lowered to the surface by raising the handle and pushing forward. When the handle is pushed downwards, the downward action causes the wheel to compress and recoil through the fulcrum member at the axle of the wheel. As a result, the blade springs upwards and forwards, thereby propelling the load of material briskly away from the apparatus.

An embodiment of the present invention comprises a wheel assembly having a rim and an axle, the axle further comprising a tubular body having two ends adapted to receive spokes which connect the axle to the rim. The axle further is adapted to receive a plurality of springs at the two respective ends of the axle to act as a fulcrum, and transmit a recoil reaction to an action applied at the axle. An elongate U-shape driving member has a curved upper portion, a generally straight middle portion and an open lower portion. The middle portion is attached to the springs at each end of the axle. A handle forms the upper portion of the driving member, and is capable of moving the wheel assembly. A shovel blade attaches to the lower portion of the driving member, the shovel blade adapted to pick up material from a surface when the blade is lowered to the surface by raising the handle and pushing forward. The blade springs upwards and forwards, thereby releasing the material briskly away from the apparatus when the handle is pushed downwards to cause the springs to compress and recoil through the fulcrum member at the axle of the wheel.

The shovel blade, when configured in a complete arc having tapered walls on the front leading edge of the shovel blade, has been found to provide better handling characteristics due to an even distribution of the load on the shovel blade when a load, such as snow, is trapped on the blade and the load is sprung from the blade. A rounded back wall allows more even distribution of the load in the shovel blade. For example, when the load enters on one side of the shovel blade, it deflects off the curved back and directs the load to the less full or empty side. More uniform distribution of weight makes throwing easier and requires less user force to prevent tipping of the device to one side. When a flat section is in the back wall of the shovel blade, it has been found to cause the shovel blade to be prone to not distribute the load as uniformly and to cause undesired imbalances due to uneven distribution of a load, such as snow, on the shovel blade.

In one embodiment, without limitation, the walls of the shovel blade may at its highest point reach about 2 (approx. 5 cm) to about 4 inches (approx. 10 cm) and taper down to next to nothing near the edge of the shovel blade leading edge and the leading edge of the shovel may have a width of up to about 28 inches (approx. 71 cm), for example between about 20 inches (approx. 51 cm) to about 28 inches (approx. 71 cm), and the shovel blade may have a length from front to back of about 14 inches (approx. 35 cm) to about 22 inches (approx. 56 cm) or about 16 inches (approx. 40 cm) to about 20 inches (approx. 51 cm).

Handling may further be improved when the shovel blade itself is curved as seen from its side perspective. The shovel blade has also been found to work better in retrieving and dispensing material when it is angled with respect to the plane under the shovel blade between any angle of from about 15° to about 35°, or from about 20° to about 30°.

The shovel blade may comprise one or more projections, e.g., a fork or pitchfork configuration, on the front end of the shovel blade to allow for easier pickup of load material, such as mulch or soil. When the load is anticipated to be snow, the shovel blade may further comprise an ice chipper attachment that extends in front of the leading edge of the shovel blade. In such case, the chipper edge, not the shovel blade edge, may touch the ground, but still allow loosened iced or packed snow to enter onto the shovel. The shovel blade may also be equipped with a metal wear strip on the leading edge of the shovel blade, which strip may or may not be replaceable.

The shovel blade may be attached to the yoke by a number of different mechanisms. For example, the shovel blade may be attached by fitting tubes into slots within or on the shovel. It has been found that attachment through an attachment plate on the underside of the shovel blade (non-load carrying side of the shovel blade) adds to the stiffness of the shovel blade while allowing the edge of the shovel blade to flex when hitting hard objects such as packed snow or ice. The plate may have a bend in it to extend further forward (closer to the leading edge) under the shovel blade to support it better. Plates are preferred over tubes as giving greater clearance (of course, the tube could also be flattened near the ends). In an advantageous embodiment, the attachment plate attaches to the underside of the shovel blade at a point from about the middle of the shovel blade to about the leading edge of the shovel blade. For example, with a steel blade it has been found that the front end of an attachment plate located from about 2 inches (approx. 5 cm) to about 4 inches (approx. 10 cm) from the leading edge of the blade may provide an unexpectedly advantageous lift/stress area without the need for increasing overall blade material thickness and stiffness. Such attachment plate, and its positioning, may also provide the ability to incorporate more curve in the shovel blade when viewing the blade from the sides, thereby incorporating strength. The edges preferably are more flexible.

The handle may be configured in a number of ways such as in a closed loop, open bar, dual handles, or straight bar. Hand grips on the handle may be used to improve grip on the device. A particularly useful bar is a curved bar with the curvature away from the machine (i.e., handles expanding out toward user).

In one embodiment, the handle is adjustable on the yoke such that the handle can be moved up or down. For example, the handle may be variably attached by use of movable bracket(s) or by sliding the handle portion into a portion of the yoke. In one embodiment, the handle is configured to comprise a moveable tube positioned within a gap of the yoke (e.g., collar) (for example, into a tube comprising a portion of the yoke) and can be slid in and out of the gap and rotated 360°, preferably affixed in its final position.

In another embodiment, the handle component is attached to the yoke via attachments through one or more holes in the handle component(s) and one or more holes in the yoke portion interfacing with the handle. Preferably one or both of the handle component or yoke has multiple holes such that the handle can be repositioned up or down along the yoke by matching one of the holes in the handle component to the yoke portion such handle component will interface. The handle assembly may comprise, for example, one piece that is curved or rectangular/square/U-shape and is open at one end and that fits over a portion of each lateral side of the yoke.

In one embodiment, the length of the yoke including the handle is about 6 feet (approx 1.8 m) to about 7.5 feet (approx. 2.3 m), or about 6.5 feet (approx. 2.0 m) to about 7 feet (approx. 2.1 m), and the height of the handle from a plane under the wheel is about 40 inches (approx. 100 cm) to about 52 inches (approx. 130 cm). The width of the handles in such embodiment are about 21 inches (approx. 66 cm) to about a 26 inches (approx. 66 cm), or about 23 inches (approx. 58 cm) to about 24 inches (approx. 61 cm). Another embodiment of the present invention involves a method of method of snow removal using an apparatus comprising a relatively large wheel substantially at the waist level of an operator. A U-shape yoke has a handle at a closed end, a shovel blade at an open end, and the yoke is mounted onto an axle of the wheel. The method involves an operator moving the apparatus along a path by pushing the handle and rolling the wheel in a direction commanded by the handle. The operator shoves onto the blade a load of material along the path of the apparatus. After picking up the load of material, the operator presses the handle downwards, to lift the shovel blade to a level that clears the path; adjusts further the level of the shovel blade to achieve a balanced load with respect to and over the axle of the wheel; transports the balanced load of material to a destination; and at destination, briskly applies body weight at the handle to propel the load of material to a substantial distance away from the apparatus.

Embodiments of the present invention will now be described by way of example with reference to the accompanying drawings, in which:
Figure 1 is a perspective view of an example of apparatus according to an embodiment of the present invention showing a relatively large wheel connected to a driving member in the shape of a yoke, the yoke having a handle at one end and a shovel blade at the other, for picking up, transporting and disposing of materials in general, and snow in particular;
Figure 2 is a top view of the apparatus of Figure 1, showing the placement of the shovel and wheel within the yoke;
Figure 3 is a side view of the apparatus of Figure 2, showing an aspect of the adjustability of the handle of the apparatus;
Figure 4 is a schematic drawing of the apparatus of Figure 3 showing the various dimensional relationships of the components of the apparatus;
Figure 5 is another schematic drawing of the apparatus of Figure 3 showing the various forces acting at the fulcrum of the apparatus;
Figure 6 is a schematic drawing of an example of an embodiment of the present invention showing the yoke having an "S-shape" middle portion and a handle which is rotatable and slidably extendable;
Figure 7 is a schematic drawing of an example of an embodiment of the present invention involving springs as an assist in propelling materials from the shovel blade;
Figure 8 is a schematic drawing of an example of an embodiment of the present invention showing blade rollers employed for ease of travel of the blade over rough ground, such as gravel surface;
Figure 9 shows a top view of an adjustable handle assembly;
Figure 10 shows a handle assembly including an adjustable handle element capable of 360° fixed rotation;
Figure 11 shows a side view of an exemplary yoke having an adjustable notched element in its middle portion;
Figure 12 shows a top view of a shovel blade having arced walls;
Figure 13 shows the side cut view of an angled shovel blade;
Figure 14 shows a top view of a shovel blade-yoke attachment assembly having an attachment plate adjoining two elements of the yoke;
Figure 15 shows a top view of a shovel blade-yoke attachment assembly having an angled attachment plate adjoining two elements of the yoke;
Figure 16 shows a cut side view of the shovel blade-yoke attachment with angled attachment plate of Figure 15;
Figure 17 shows a perspective view of an example of an embodiment of the present invention having an adjustable handle assembly; and,
Figure 18 shows a perspective view of another example of an embodiment of the present invention having an adjustable handle assembly.

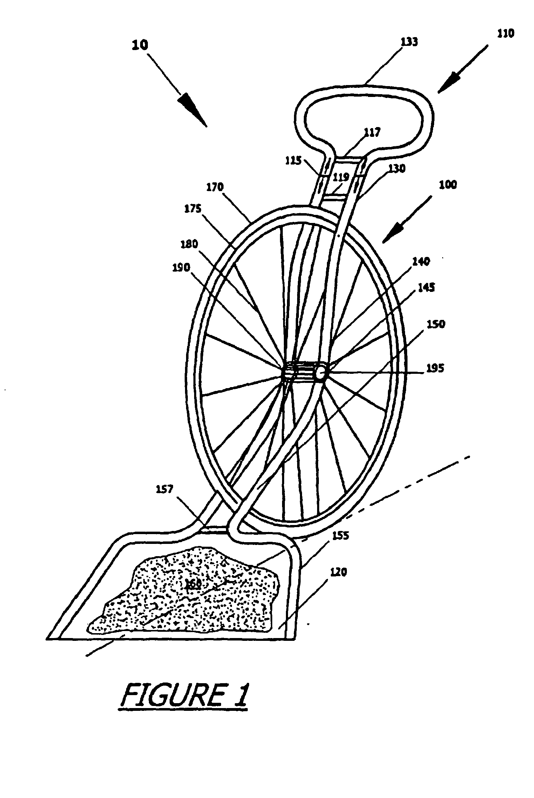

Referring now to the drawings, Figures 1-8 show examples of embodiments of the present invention involving the pick up, transport and disposal of materials in an efficient and effective manner.

Reference numeral 10 in Figure 1 generally refers to an apparatus representing an embodiment of the present invention comprising a wheel assembly 100, and a driving member 110 resembling substantially a U-shape yoke having a handle 133 at its closed and a shovel blade 120 attached to its open end, wherein the yoke is mounted onto axle 190 of the wheel. The wheel and the blade are incorporated into the driving member in a manner that the blade rests on the ground in its normal position. An operator uses the handle to move the shovel in any direction by rolling the wheel on the ground. The operator also uses the handle to guide the shovel in shovelling into the blade material lying along its path. The operator then lifts the shovel blade off the ground to pick up a load of material, followed by further lifting to balance the load at a comfortable walking posture. At destination, the operator presses on the handle with a quick downward body (or arm) motion, to propel the load away from the shovel. The operator can dispose the material either straight ahead by directing the shovel in the direction of the motion of the apparatus, or to the side by flipping the shovel sideways.

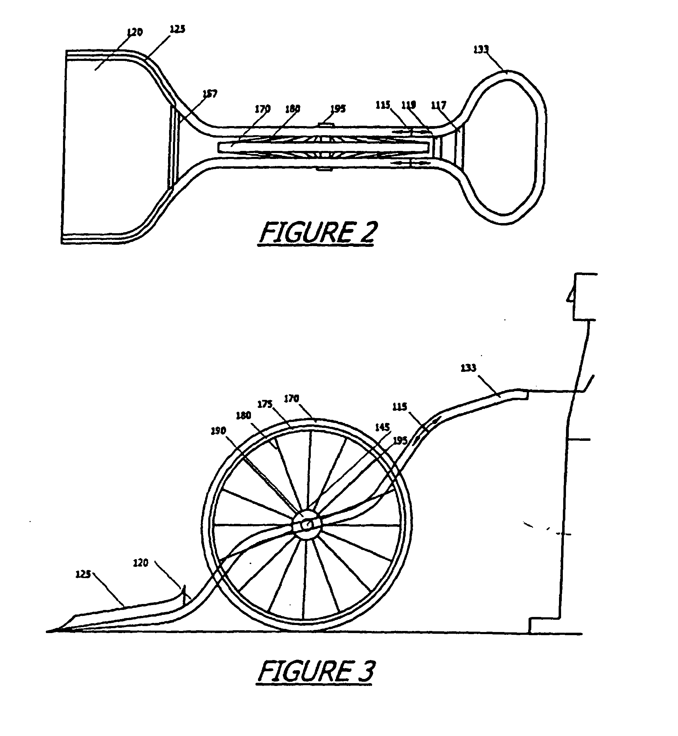

It will be appreciated by those skilled in the art and by ordinary users of snow shovels that the large wheel 100 shown in Figure 1 (as further defined below and depicted in Figure 3 relative to human dimensions) enables a user to lift the blade and snow above unshovelled snow height and travel over it and any rough surface without compressing unshovelled area to be traversed. The relatively high-level handle of the shovel enables the user to comfortably accelerate the load of snow forward off the blade while pushing down the handle, which enhances the throw distance of the snow trajectory.

The wheel assembly 100, driving member 110 and shovel 120 are formed ergonomically to assist in picking up and releasing a heap of material 160, such as sand, gravel or snow, generally aligned in the direction of motion, with least stress to the body of the operator, and especially to prevent back stress or injury. As will be explained in more detail later, a recoil assist is provided to the action of the operator of the apparatus from a fulcrum area of the apparatus to release the material in a brisk and efficient manner. The material can also be picked up and released while the wheel is stationary. Furthermore, the material can be throwingly released, or propelled, forward or sideways, as desired, while the wheel is stationary or in motion.

In an embodiment of the present invention shown in Figure 1, driving member 110 is formed preferably of continuous metal tubing that is shaped to have a handle 133 in its upper portion 130, a fulcrum bearing area 145 in middle portion 140 and an open frame 155 in the lower portion 150 to accept blade 120. Handle 133 is extendable at 115 to permit length, height and leverage adjustments, as will be described in more detail later. Fulcrum bearing area 145 shown in the same Figure 1 comprises an opening in the middle portion 140 of the driving member, preferably capable of receiving a roller bearing (not shown). A portion 195 of axle 190 of the wheel assembly 100 fits inside the fulcrum area 145 of the driving member. The attachment point at 145 is designed to reconfigure the shovel for user height, strength and snow conditions. An attachment that can slide along the middle portion of the driving member can be used to adjust the height of the handle for leverage as well as for ease of operation of the apparatus. Aspects of the function of the fulcrum, and attachments thereto, will be explained in more detail below with respect to the relationship of the fulcrum to the handle and the shovel for disposing of materials from the shovel in a brisk, and yet ergonomically advantageous manner.

In an aspect of the embodiment shown in Figure 1, the driving member 110 is formed in an elongate U-shape, resembling a yoke, with an upper portion providing the handle 133, and a narrowed middle portion 140 with distal sides to accommodate the axle 125 of the wheel assembly 100. The distance between the relatively long legs (encompassing generally the middle portion 140) of the U-shape driving member 110 is determined by braces 117, 119 and 157 formed judiciously between the legs so that the axle fits in the fulcrum areas 145. It will be known to those skilled in the art that any number of different ways can be employed to attach the axle of the wheel in the openings forming the fulcrum areas 145. For example, the well-known quick release for bicycle wheels can be employed. Alternatively, the axle in the form of a tube having protrusions 195 with inside shoulders (not shown) can be snapped into openings 145 by gently spreading apart the legs 140 of the U-shape driving member. These wheel mounting features are well known in the art and are therefore not described in detail here. It is preferred that the tubing material for the driving member 110 comprises hollow aluminum, or other metal tubing. Non-metallic materials, such as plastics, may also be used.

In another aspect of an embodiment of the present invention, wheel assembly 100 comprises a wheel 170, a rim 175 and spokes 180 which connect the axle 190 to rim 175, as shown in Figure 1 and in top view of Figure 2. Different types of wheels, including different treads, widths or a continuous web connecting the axle to the rim can also be used. Relatively narrow wheels, such as shown in Figure 1, provide the advantage of not packing down snow, for example, when shoveling snow. The dimensions of wheel 170 and the position of handle 133 relative to axle 190 of the wheel are determined generally with respect to the position of the arms of a human body. A relative position of handle 133 with respect to a general body posture is shown in Figure 3.

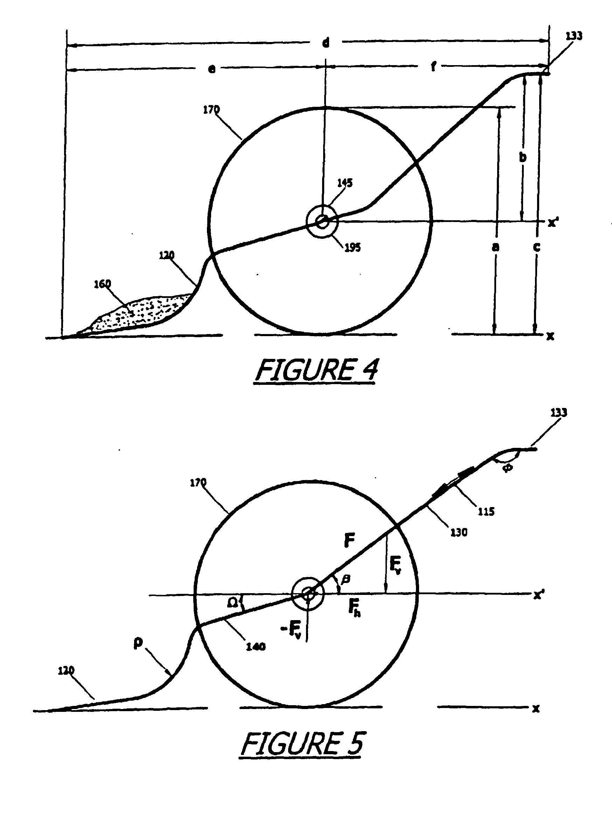

In still another aspect of an embodiment of the present invention shown in Figure 4, the wheel diameter a is between about 30 to 36 inches (approx. 76 to 91 cm). It is preferred that the height of handle 110 from a datum plane directly under the wheel, that is, from a ground datum x, is between about 48 to 60 inches (approx. 120 to 150 cm). The height of handle 133 from the center of axle 195 is preferably between about 26 to 42 inches (approx. 66 to 106 cm). In another example of an embodiment of the present invention, further adjustment of the height of the handle is provided by a telescoping means 115, such as a sliding hollow outer tube over an inner tube as shown in Figure 3, which ensures better ergonomic comfort. The overall length d of the wheeled shovel is between about 78 to 88 inches (approx. 200 to 225 cm). Distance e from the tip of the shovel blade 120 to the fulcrum area 145 near the center of the wheel assembly 100 is between about 32 to 42 inches (approx. 81 to 107 cm). Distance f from the fulcrum area to the tip of the handle shown in Figure 4 can be varied depending upon the preferences on the part of the operator. For example, distance f can be adjusted to make it easier to pick up and lift a load, balance the load on the apparatus more evenly for ease of transport to a location, and/or to gain more leverage in shoving the load from the shovel at the location of interest.

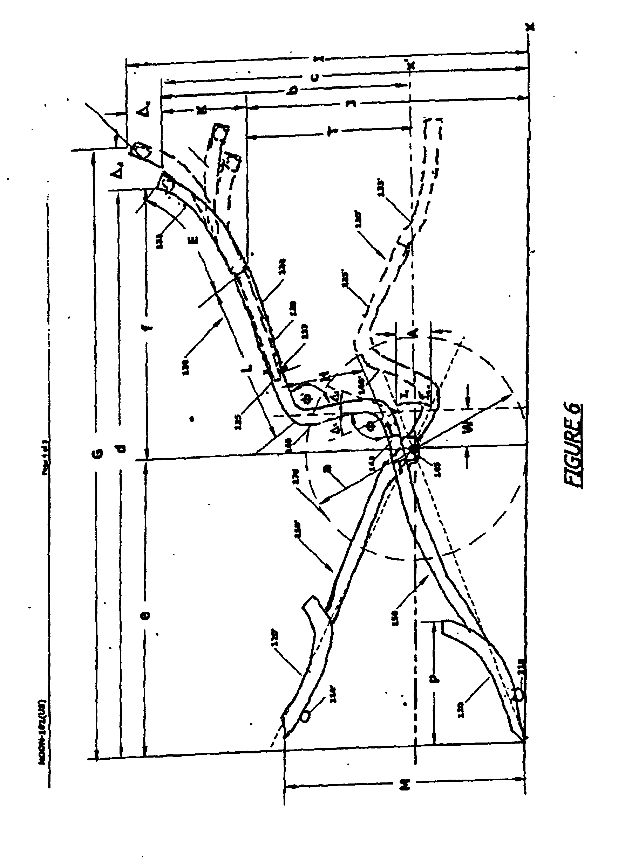

Thus, it will be apparent to those skilled in the art that the relationship between the relatively large diameter of the wheel, overall length of the shovel and the height of the shovel handle from the ground determine the ease with which snow may be shoveled. The chest-high position of the handle assists in pushing the accumulated snow or other material that is being shovelled. A ratio greater than 1:1 between the length of the yoke and the height of the handle provides the ease with which a blade full of snow can be lifted as the handle is lowered. This leverage ratio can be varied by varying the point at which the yoke connects to the axle. Furthermore, differently shaped yokes, such as shown in Figures 4 and 5, contribute differently to the efficiency of the shovel. A preferred "S-shape" yoke is shown in Figure 6, and will be described in more detail later.

In addition to the ergonomic advantages, the embodiments of the present invention provide enhanced functional performance through a judicious use of a fulcrum line formed at the central portion of the wheel assembly shown in Figure 5. Line x' passing through the center of the fulcrum area 145 parallel to the ground datum line x forms the fulcrum line. A force F applied to the fulcrum through an action at the handle 133 can be resolved into a horizontal component Fₕ and a downward vertical component Fv, as shown in Figure 5. With no substantial resistance to the horizontal component Fₕ, the wheel rolls to the left, in accordance with the direction of the applied force F shown in Figure 5, while the ground under the wheel reacts to the downward component Fv giving rise to an upward recoil reaction -Fv by the wheel. A brisk and mostly downward action on the handle, using arm and/or body weight, for example, produces a recoil assist to the throwing power. The magnitudes of the component vectors are determined by angle β, and of the transmittal force F substantially by angle θ. Angle Ω contributes to the throwing power. Furthermore, the shovel blade can be formed in different configurations to assist in efficient release of material 160 from the shovel. For example, the shovel blade can have a bottom portion with a relatively large radius of curvature p, resembling a scoop, for easy slide of material from the shovel, as well as for keeping the material from sliding backwards and spilling off the shovel. It will be appreciated by those skilled in the art that that these various parameters can be set to values that are commensurate with the ergonomic and functional requirements of the apparatus of the present invention.

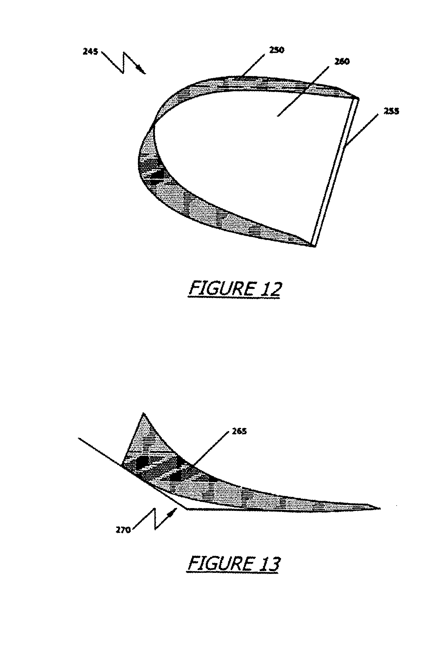

Figure 12 shows a shovel blade 245 having a load-carrying inner surface 260 having arced walls 250 having the side walls tapering to near nothing near the leading edge 255 of the shovel blade 245 (both side walls are tapered). In a preferred embodiment shown in Figure 13, the shovel blade 245 is arced in side view 265 so as to form an angle between its upper and lower portion.

Figure 6 illustrates a preferred embodiment of the invention with similar characters and numerals referring to similar parts throughout the several views. The side view of the yoke shown in Figure 6 has an upper portion 130, middle portion 140 and a lower portion 150. The yoke is attached to wheel 170 (shown in phantom) at its axle 195 (not shown) in a notch O of a slidable sleeve 143. Sleeve 143 can be slid (in the direction of either one of the arrows shown in the same figure) over portion 150 of the yoke to change the position of fulcrum 145, the effective leverage length f and the "throw arm" e. The throw is accomplished by pushing handle 133 in a downward direction to the phantom position 133'. The primed reference numerals, namely, 130', 135', 140', 150' and 120', show other parts of the yoke 110, including the shovel blade, in a position following the downward motion of the handle of the yoke 110. It will be understood by those skilled in the art that various different mechanisms can be used to adjust the fulcrum point to achieve the desired leverage for throwing the load off the shovel.

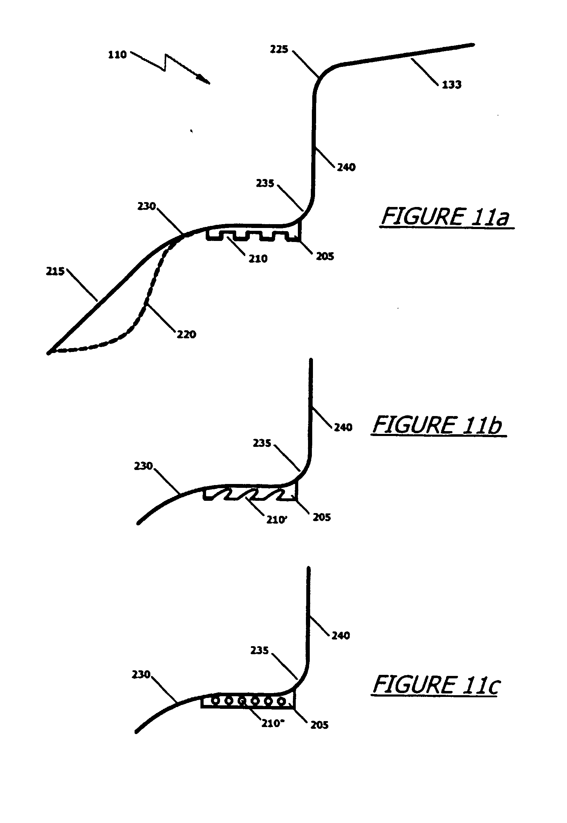

In Figure 11, there is shown a side view of a yoke or driving member 110 having an adjustable length notched element 205, for example a bar, in the middle portion with one or more notches 210. This allows the fulcrum point to be changed without changing, or reducing the amount of change in, the height of the handle above a plane positioned at the bottom of the wheel necessary to effect the same applied-force:load-displaced ratio, the length of the yoke portion above the middle portion and/or changing the length of the yoke portion below the middle portion. The notches may be various shapes such as rectangular, square, circular, or angled. Angled slots may be preferred as they may reduce the inclination of the wheel in respect to the notched element to permit better fixation.

By changing the notch 210 associated with the axle (e.g., the axle sitting in the notch), the leverage changes even if the structure, height and/or length of the yoke 110 does not change. The notched element 205 may further be configured such that repositioning along the element among the notches can cause a change in the angle of the shovel blade with respect to the ground, such as a change from shape 215 to shape 220. Reducing the angle of the shovel blade as it strikes the ground reduces friction. In such embodiment, there is shown a yoke 110 having a handle section 133, an "S-curve" middle section having an upper elbow 225, a lower elbow 230, a middle elbow 235, a linear section 240, and a shovel blade section of shape 215 and shape 220. Figures 11b and 11c illustrate other notched element 205 embodiments that may be employed (only a portion of yoke 110 is shown). Notched element 205 of Figure 11b illustrates angled notches 210' which allow for improved holding of the yoke 110 to the axle as the yoke 110 is moved back and forth. Notched element 205 of Figure 11c comprises openings 210" in the form of holes. Attachment through holes further enhances the holding of the yoke 110 to the axle as the yoke 110 is moved back and forth.

An aspect of an embodiment of the present invention involves an "S-curve" section forming the middle portion 140 of the yoke shown in Figure 6. The substantially "S-curve" (including the substantially straight section in the middle portion of the curve) is integral to optimizing "gearing"/leveraging in order to enhance the acceleration of the blade and throwing of the load faster, higher and farther from the shovel. The "S" shape is formed to have the lower curve subtending angle Φ. Angle Φ of the lower portion of the "S-curve" and angle Φ' of the upper portion, as shown in Figure 6, are both preferred to be between about 80° and 90°, though it will be appreciated that other angles may also be used. In one embodiment (not shown), with unanticipated leverage ability, the included angle Φ' is between about 80° to about 120°, or more advantageously between about 80° to about 100°, and more preferably between about 80° to about 90°, and the angle Φ is between about 110° to about 165°, or more preferably about 120° to about 155°. In such cases, the upper angle with the lower angle provide for a top handle section that can be relatively straight and horizontal. This may enhance performance, for example, by allowing a straight section that allows for ease in handle-length extension without necessarily the need to significantly change handle height as compared to other configurations. It may also allow the user to exert greater force without unduly increasing the friction of the shovel with the ground as compared to other configurations. Turning back to Figure 6, as handle 133 is lowered, the elbow of the lower portion of the "S-curve" travels a distance A through arcs Σ₁ and Σ₂, as shown in the same Figure 6. The straight portion of the S-curve traverses the arcs Δ₁ and Δ₂. As the handle is lowered, the "S-curve" starts moving downward and the handle thus only needs to be lowered an amount equal to T in order to lift blade 120 to height M in new position 120'. As the middle portion 140 comprising the "S-curve", including the straight section, is positioned closer to the fulcrum area 145, the magnitude of A and leverage ratio M/T (the ratio of blade lift to handle movement) vary accordingly. It is preferred that the length H of the straight section of the "S-curve" is greater than A so that throughout the entire range of handle motion, the desired leverage (based on axle attachment point) or "gearing" is maintained as the blade is raised and lowered. Thus, for optimal operation (i.e., comfortably, and without bending on the part of the operator of the shovel) it is preferred that the maximum travel T of handle T>H>A, Δ₁≈Δ₂, and Σ₁≈Σ₂.

In another example of an embodiment of the present invention, the handle portion 133 shown in Figure 6 has a shank 134, which slidably and rotatably fits inside hollow sleeve section 135. Handle 133 can be pulled out, pushed in and/or rotated in order to find the most ergonomic position for shoving, picking up and throwing a load from the shovel. Shank 134 can be slid to any one of continuous positions along sleeve 135 by utilizing friction hold against the inside surface of the hollow sleeve 135. However, pins 137 are preferred which engage holes 139 judiciously placed along the length of section 135. Length E along handle 133 is between about 12 to 18 inches (approx. 30 to 45 cm), while length L along section 135 is between about 16 to 24 inches (approx. 40 to 60 cm), although other lengths can also be used. The overall length d of the shovel apparatus can be increased by Δ_{d}, preferably between about 6 to 12 inches (approx. 15 to 30 cm), while the overall height can be increased by Δ_{c}, preferably between about 4 to 8 inches (approx. 10 to 20 cm), thus yielding an overall length G between about 89 to 100 inches (approx. 225 to 255 cm) and overall height I between about 42 to 66 inches (approx. 107 to 168 cm). With the preferred dimensions cited here, the shovel blade can be comfortably raised to a height between about 36 to 44 inches (approx. 90 to 112 cm).

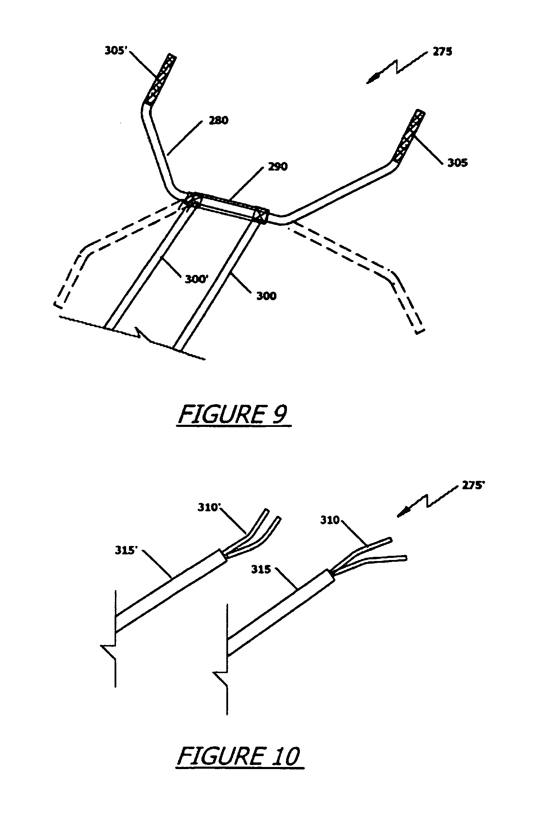

Figure 9 shows a handle assembly 275 wherein a "U-shape" handle bar 280 is housed in its middle part in cross housing 290 supported by two support bars 300, 300'. "U-shape" handle bar 280 is shown to be movable within cross housing 290 comprising a tubular housing. Handle bar 280 is also shown to comprise hand grips 305, 305'.

Figure 10 shows a handle assembly 275' wherein the assembly includes adjustable handle elements 310, 310' inserted into open tubular handles 315, 315' (315, 315' each show two configurations of the handle element). Such handle elements provide friction to the inner walls of open tubular handle 315, 315' and permit sliding of the adjustable handle elements within 315, 315' to allow for 360° movement. Handle elements 315, 315' may be covered with a covering (not shown) for aesthetic reasons and/or for easier gripping.

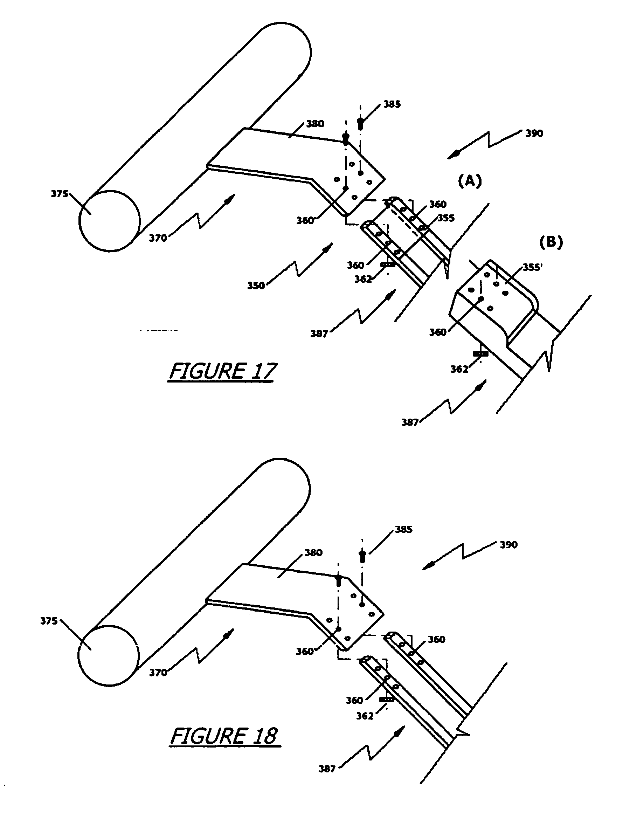

Figure 17(A) shows a perspective view of a handle assembly embodiment 350. Such embodiment includes an attachment plate 355 which may be, for example, welded or attached in some other fashion to the yoke 387. Attachment plate 355 includes a plurality of attachment conduits 360, shown as holes in the illustration, positioned for attaching engagement with corresponding attachment conduits 360', also shown as holes in the illustration, associated with handle 370. Handle 370 is shown to comprise a horizontal bar 375, which may be tubular in configuration, fixed to a bent plate portion 380 having a lower portion comprising attachment conduits 360'. Conduit(s) 360' can be attached to corresponding conduit 360 in attachment plate 355 by way of fastener 385, such as a bolt. The bend in the bent plate portion 380 of handle 370 allows the handle to be flipped over and installed upside down to change handle height, and the different attachment conduits allow the handle height to be set at different heights. Figure 17(B) shows another handle assembly embodiment wherein the end of the yoke is adapted to include an expanded open attachment end 387 having a top attachment plate 355' with attachment conduits 360 (shown as holes), a bottom plate (not shown) opposed to said top attachment plate 355' (the bottom plate also preferably constituting an attachment plate with attachment conduits), and an open end 386 configured to permit the bent portion of handle 370 to fit between the top attachment plate 355' and the bottom plate. One or more, preferably all, attachment conduits in top attachment plate 355', in the bent portion of handle 370, and in the bottom attachment plate (not shown) are preferably matched to allow a fastener 385, for example a bolt, to pass through each. Fastener 385 may lock the attachment through other attachments such as a nut 362.

Figure 18 shows a perspective view of yet another adjustable handle assembly 390. Such embodiment also comprises a handle 370 comprising a horizontal bar 375 affixed to a bent plate portion 380 having a lower portion comprising attachment conduits 360'. As opposed to the embodiment in Figure 17, rather than attachment plate 355 (of Figure 17), corresponding conduits 360 are found in the yoke proper 387. Conduit(s) 360' can be attached to corresponding conduit(s) 360 in yoke 387 by way of a fastener 385, for example a bolt. Alternatively, such attachment of handle 370 to yoke 387 can be done by slotted section such that they attach to one another without a fastener but are still secure (not shown).

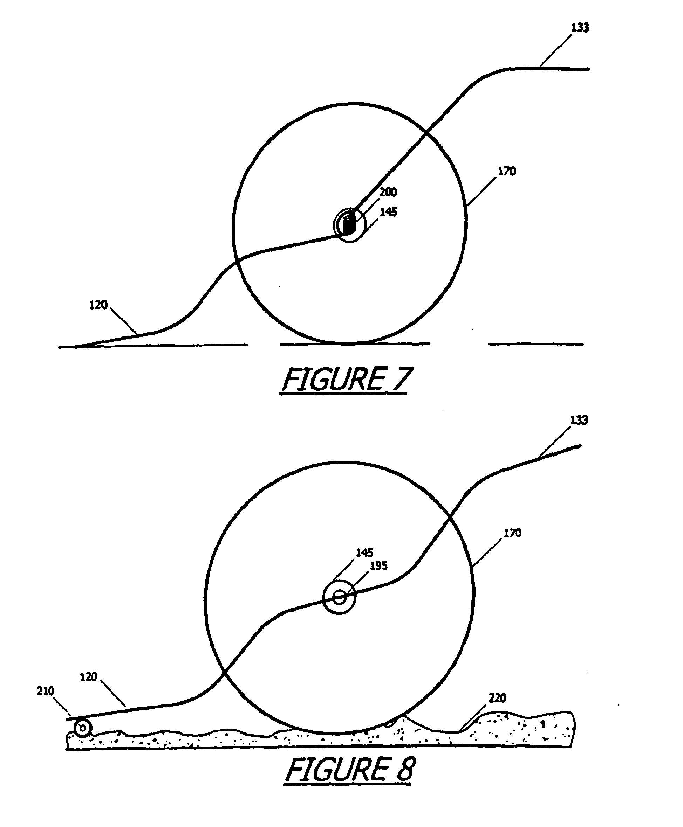

In another embodiment, plural springs 200 (only one shown in the side view in Figure 7) are utilized to provide an enhanced recoil reaction at the fulcrum line. This may be particularly advantageous when the tire used for the wheel 170 is not as flexible as, for example, a bicycle tire with a pneumatic tube. In Figure 7, axle 190 is adapted to receive one spring at each of the two respective ends 195 of the axle which act as a fulcrum and transmit a recoil reaction to shovel blade from an action applied at the axle.

In still another embodiment, rollers 210 are attached to the bottom of shovel blade 120 for ease of traversing over rough ground surface 220, such as gravel, as shown in Figure 8. It will be obvious to those skilled in the art that rollers will also reduce friction with the ground, especially as more load accumulates on the shovel while the shovel is being pushed forward to pick up more material, such as snow, from the ground. Similar rollers with similar reference numerals are shown in Figure 6 where the primed numeral corresponds to the position of the rollers when shovel 120 is elevated. As seen in Figure 6, the shovel to which the roller is attached has a lateral dimension P between about 15 to 18 inches (approx. 38 to 45 cm).

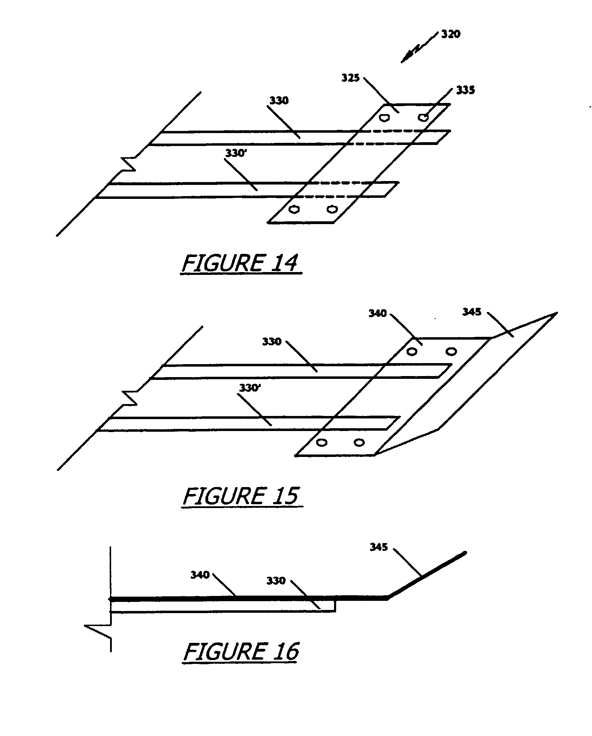

Figures 14 to 16 show a shovel blade-yoke attachment assembly 320. Such assembly includes yoke blade attachment ends 330, 330' and attachment plate 325 having a plurality of attachment portions 335, shown in the figure as a number of holes through which affixing devices, such as bolts, may be placed. The attachment to the shovel blade may or may not entail components or load surface of the shovel blade. In Figure 15, a preferred attachment plate 325 having a horizontal plane portion 340 and angled plane portion 345 are shown. The included angle may be about 120° to about 170°, or more preferably about 130° to about 150°. The angle gives strength to resist bending of the plate. The angled plane portion 345, when not affixed to the shovel blade, allows a flexing and recoil of the shovel blade, aiding in loading and unloading of a load. Figure 16 shows a cross-sectional view of such angled plate.

The embodiments of the present invention shown in the drawings are adaptable for various enhancements and improvements in useful ways. For example, a shovel blade may be designed with a more flexible material to enhance the ability to throw the shovel load. The flexibility of the blade provides a trampoline effect as the blades flexes back to its original shape from a bent shape as it accelerates to unload the load. A comparable effect is obtained by attaching the shovel blade to the shovel yoke with a spring-loaded hinge (not shown) that enhances the throwing capacity of the wheeled shovel. Furthermore, shovel blade 120 is preferably fitted with side walls 125 as shown in Figure 3 in order to be able to pick up and retain liquid-like substances, such as snow slush. In another example, the driving member, resembling a yoke, is made to fold at the fulcrum area where a quick release wheel is mounted and removed readily for ease of transporting the apparatus. As an alternative, the driving member comprises two halves (not shown) attached to each other at the fulcrum area 145 of Figure 1. It will also be understood that a plurality of wheels of various widths can be used instead of the one wheel shown in the drawings. Further, the apparatus can be motorized to pick up, transport and propel a load of material from the wheeled shovel. Also, motor energy can be utilized to store energy in a spring or in other energy storing device, which in turn can be used on demand to assist in pushing and/or throwing the load on the shovel.

Embodiments of the present invention have been described with particular reference to the examples illustrated. However, it will be appreciated that variations and modifications may be made to the examples described within the scope of the present invention.

## Claims

1. A wheeled shovel (10) comprising:
a wheel assembly (100) having an axle (190) and a wheel (170);
a frame (110) having an upper portion, a lower portion, and a middle portion disposed generally between upper and lower portions of the frame (110), the middle portion adjacent the axle (190) such that the axle (190) is operable as a fulcrum about which the frame (110) can pivot;
a handle (133) attached to the upper portion of the frame; and,
a shovel blade (245) attached to the lower portion of the frame, **characterised in that**:
said frame lower portion is lower than the axle (190) when the shovel blade (245) and wheel (170) are on the same horizontal surface;
the wheel (170) has an outer diameter of between about 76 to 91 cm (30 to 36 inches) and,
the wheel assembly (100), the frame (110), the handle (133), and the shovel blade (245) are cooperatively configured so as to enable the wheeled shovel (10) to throw snow generally upwardly and forwardly away from the shovel blade (245) in response to a sufficient force applied to the handle for pivoting the frame (110) relative to the axle (190) with a recoil generated through the fulcrum at the axle (190).

2. A wheeled shovel (10) according to claim 1, wherein the wheeled shovel (10) comprises at least one or more of a plurality of handle attachment configurations and a plurality of axle mounting locations, for selectively adjusting a leverage ratio of the wheeled shovel (10).

3. A wheeled shovel (10) according to claim 1 or claim 2, wherein the middle portion includes first and second generally straight portions cooperatively defining a generally V-shape profile, and wherein the second generally straight portion is generally horizontal when the shovel blade is lowered to the horizontal surface supporting the wheeled shovel (10).

4. A wheeled shovel (10) according to any of claims 1 to 3, wherein the upper portion of the frame (110) is curved such that the curved upper portion and the middle portion cooperatively define a generally S-shape profile.

5. A wheeled shovel (10) according to any of claims 1 to 4, wherein the middle portion includes first and second generally straight portions cooperatively defining a generally V-shape profile, and wherein the wheeled shovel (10) is configured with the axle having longitudinal adjustability relative to the second generally straight portion of the frame (110) that allows selective adjustment to the axle longitudinal positioning without substantially changing the axle height relative to a horizontal surface supporting the wheeled shovel (10).

6. A wheeled shovel (10) according to any of claims 1 to 5, further comprising means for selectively adjusting the axle longitudinal positioning without substantially changing the axle height relative to a horizontal surface supporting the wheeled shovel (10).

7. A wheeled shovel (10) according to any of claims 1 to 6, further comprising at least one axle receiver having a plurality of axle receiving cavities, the axle receiving cavities providing a plurality of different mounting locations for the axle relative to the frame (110).

8. A wheeled shovel (10) according to any of claims 1 to 7, wherein the handle position is adjustable through an extendable and rotatable connection to the frame (110) such that the handle (133) can be slidably pulled out, slidably pushed in, and rotated relative to the frame (110) for attachment to the frame (110) at two or more different handle positions, whereby the extendable and rotatable connection allows selective adjustment of at least one or more of the handle height, handle length, and leverage ratio of the wheeled shovel (10), and, thereby, allows tailoring of the wheeled shovel (10) for a particular user or conditions.

9. A wheeled shovel (10) according to any of claims 1 to 8, wherein the handle (133) is adjustable through a telescoping slidable connection to the frame (110) such that the handle can be slidably extended or slidably retracted relative to the frame (110) for attachment to the frame (110) at two or more different handle positions, whereby the telescoping slidable connection (115) allows selectively adjustment to at least one or more of the handle height, handle length, and leverage ratio of the wheeled shovel (10), and, thereby allows tailoring of the wheeled shovel (10) for a particular user or conditions.

10. A wheeled shovel (10) according to any of claims 1 to 9, wherein the handle (133) is adjustable through a rotatable connection to the frame (110) such that the handle can be rotated relative to the frame (110) and attached to the frame (110) in at least a first handle orientation or a second handle orientation rotated one hundred eighty degrees from the first handle orientation, whereby the rotatable connection allows selective adjustment to at least one or more of the handle positioning and leverage ratio of the wheeled shovel (10), and, thereby, allows tailoring of the wheeled shovel (10) for a particular user or conditions.

11. A wheeled shovel (10) according to any of claims 1 to 10, further comprising means for selectively attaching the handle to the frame (110) at two or more different handle positions.

12. A wheeled shovel (10) according to any of claims 1 to 11, wherein the middle portion includes first and second generally straight portions cooperatively defining a generally V-shape profile, and wherein the axle location is at about the intersection of the first and second generally straight portions that cooperatively define the generally V-shape profile.

13. A wheeled shovel (10) according to any of claims 1 to 12, wherein the middle portion includes first and second generally straight portions cooperatively defining a generally V-shape profile, and wherein the wheeled shovel (10) includes a plurality of axle mounting locations at least one of which is at about the intersection of the first and second generally straight portions that cooperatively define the generally V-shape profile.

14. A wheeled shovel (10) according to any of claims 1 to 13, wherein the axle (190) comprises a tubular body having two end portions with at least one spring at each said end portion of the tubular body, whereby the springs are compressed when the handle is pushed generally downwards such that the compression of the springs provides a recoil action.

15. A wheeled shovel (10) according to any of claims 1 to 14, wherein the middle portion is attached to the axle (190), and wherein the middle portion has a generally "S shape" defined by a lower portion included angle Φ and an upper portion included angle Φ', wherein the lower portion included angle Φ is between about eighty degrees and one hundred sixty five degrees, and wherein the upper portion included angle is Φ' is between about eighty degrees and one hundred twenty degrees.

16. A wheeled shovel (10) according to any of claims 1 to 15, wherein the handle (133) is generally T-shape, and wherein the handle (133) is attached to the frame (110) with a bent attachment plate.

17. A wheeled shovel (10) according to claim 8, wherein the extendable and rotatable connection the handle (133) to be attached to the frame (110) in at least a first handle orientation or a second handle orientation rotated one hundred eighty degrees from the first handle orientation.

18. A wheeled shovel (10) according to claim 1, wherein the wheeled shovel (10) is configured such that the leverage ratio can be adjusted.

19. A wheeled shovel (10) according to any of claims 1 to 18, wherein the axle (190) is higher than the blade attachment location when the shovel blade (245) and wheel (170) are on the same horizontal surface.

20. A wheeled shovel (10) according to any of claims 1 to 19, wherein the axle (190) is higher than the shovel blade (245) when the shovel blade (245) and wheel (170) are on the same horizontal surface.

## Patentansprüche

1. Mit einem Rad versehene Schaufel (10), umfassend:
- eine Rad-Baugruppe (100) mit einer Achse (190) und einem Rad (170);
- einen Rahmen (110) mit einem im Allgemeinen zwischen oberen und unteren Abschnitten des Rahmens (110) liegenden unteren Abschnitt, einem oberen Abschnitt und einem mittleren Abschnitt, wobei der mittlere Abschnitt derart benachbart der Achse (190) angeordnet ist, dass die Achse (190) als Dreh- und Angelpunkt dienen kann, um den der Rahmen (110) verschwenkt werden kann;
- einen am oberen Rahmenabschnitt befestigten Griff (133), und
- ein am unteren Rahmenabschnitt befestigtes Schaufelblatt (245), **dadurch gekennzeichnet, dass**
sich der untere Rahmenabschnitt unterhalb der Achse (190) befindet, wenn sich das Schaufelblatt (245) und das Rad (170) horizontal auf ein und derselben Ebene befinden;
wobei das Rad (170) einen Außendurchmesser von zwischen etwa 30 bis 36 inches (etwa 76 bis 91 cm) aufweist und
die Rad-Baugruppe (100), der Rahmen (110), der Griff (133) und das Schaufelblatt (245) zusammenwirkend ausgelegt sind, damit die mit einem Rad versehene Schaufel (10) in der Lage ist, Schnee im Allgemeinen nach vorn oben weg von dem Schaufelblatt (245) in Reaktion auf die hinreichende Anwendung von Kraft auf den Griff zum Verschwenken des Rahmens (110) im Hinblick auf die Achse (190) auszuwerfen, wobei der Dreh- und Angelpunkt einen Rückstoß an der Achse (190)erzeugt.

2. Mit einem Rad versehene Schaufel (10) nach Anspruch 1, wobei die mit einem Rad versehene Schaufel (10) zumindest eine oder mehrere einer Vielzahl von Gestaltungsmöglichkeiten zur Befestigung des Griffs sowie eine Vielzahl von Positionen zur Befestigung der Achse umfasst, um ein Hebelverhältnis der mit einem Rad versehenen Schaufel (10) selektiv zu verstellen.

3. Mit einem Rad versehene Schaufel (10) nach Anspruch 1 oder 2, wobei der mittlere Abschnitt erste und zweite, im Allgemeinen ununterbrochene Abschnitte einschließt, durch deren Zusammenwirken ein im Allgemeinen V-förmiges Profil festgelegt wird und wobei der zweite im Allgemeinen ununterbrochene Abschnitt im Allgemeinen horizontal verläuft, wenn das Schaufelblatt bis zu der horizontalen Fläche abgesenkt ist, die die mit einem Rad versehene Schaufel (10) trägt.

4. Mit einem Rad versehene Schaufel (10) nach Anspruch 1 bis 3, wobei der obere Rahmenabschnitt (110) derart gekrümmt ist, dass ein im Allgemeinen S-förmiges Profil durch den gekrümmten oberen Abschnitt und den mit ihm zusammenwirkenden mittleren Abschnitt festgelegt wird.

5. Mit einem Rad versehene Schaufel (10) nach einem der Ansprüche 1 bis 4, wobei der mittlere Abschnitt im Allgemeinen ununterbrochene erste und zweite Abschnitte einschließt, durch deren Zusammenwirken ein im Allgemeinen V-förmiges Profil festgelegt wird und wobei die mit einem Rad versehene Schaufel (10) so ausgestaltet ist, dass die Achse im Hinblick auf den zweiten im Allgemeinen ununterbrochenen Abschnitt des Rahmens (110) der Länge nach anpassbar ist, wodurch eine selektive Anpassung an die Längspositionierung der Achse möglich ist, ohne die Höhe der Achse hinsichtlich einer horizontalen Fläche, die die mit einem Rad versehene Schaufel (10) trägt, im Wesentlichen zu verändern.

6. Mit einem Rad versehene Schaufel (10) nach einem der Ansprüche 1 bis 5, weiterhin umfassend: Hilfsmittel zum selektiven Anpassen an die Längspositionierung der Achse, ohne die Höhe der Achse hinsichtlich einer horizontalen Fläche, die die mit einem Rad versehene Schaufel (10) trägt, im Wesentlichen zu verändern.

7. Mit einem Rad versehene Schaufel (10) nach einem der Ansprüche 1 bis 6, weiterhin umfassend:
zumindest einen Achsaufnehmer mit einer Vielzahl die Achse aufnehmender Hohlräume, wobei die die Achse aufnehmenden Hohlräume eine Vielzahl an unterschiedlichen Positionen zur Befestigung der Achse im Hinblick auf den Rahmen (110) aufweisen.

8. Mit einem Rad versehene Schaufel (10) nach einem der Ansprüche 1 bis 7, wobei die Stellung des Griffs durch eine ausziehbare und einfahrbare Verbindung mit dem Rahmen (110) derart anpassbar ist, dass der Griff (133) gleitend herausziehbar, gleitend hineinschiebbar ist und im Hinblick auf den Rahmen (110) an zwei oder mehreren unterschiedlichen Griffstellungen zwecks Befestigung an dem Rahmen (110) drehbar ist, wobei die herausziehbare und drehbare Verbindung eine selektive Anpassung zumindest entweder der Griffhöhe, der Grifflänge oder des Hebelverhältnisses der mit einem Rad versehenen Schaufel (10) gestattet und **dadurch** die maßgeschneiderte Ausgestaltung der mit einem Rad versehenen Schaufel (10) für einen bestimmten Nutzer oder bestimmte Zwecke erlaubt.

9. Mit einem Rad versehene Schaufel (10) nach einem der Ansprüche 1 bis 8, wobei der Griff (133) durch eine teleskopierbare Gleitverbindung mit dem Rahmen (110) derart anpassbar ist, dass der Griff gleitend hineinschiebbar oder gleitend herausziehbar im Hinblick auf den Rahmen (110) zur Befestigung an dem Rahmen (110) an zwei bzw. mehreren unterschiedlichen Griffstellungen ist, wobei die teleskopierbare Gleitverbindung (115) eine selektive Anpassung zumindest entweder der Griffhöhe, der Grifflänge oder des Hebelverhältnisses der mit einem Rad versehenen Schaufel (10) gestattet und **dadurch** die maßgeschneiderte Ausgestaltung der mit einem Rad versehenen Schaufel (10) für einen bestimmten Nutzer oder bestimmte Zwecke erlaubt.

10. Mit einem Rad versehene Schaufel (10) nach einem der Ansprüche 1 bis 9, wobei der Handgriff (133) durch eine Drehverbindung mit dem Rahmen (110) derart anpassbar ist, dass der Griff im Hinblick auf den Rahmen (110) drehbar ist und in zumindest einer ersten Ausrichtung des Griffs oder einer zweiten Ausrichtung des Griffs um 180° zur ersten Ausrichtung des Griffs gedreht werden kann, wobei die Drehverbindung eine selektive Anpassung zumindest entweder an die Griffhöhe, die Grifflänge oder das Hebelverhältnis der mit einem Rad versehenen Schaufel (10) gestattet und **dadurch** die maßgeschneiderte Ausgestaltung der mit einem Rad versehenen Schaufel (10) für einen bestimmten Nutzer oder bestimmte Zwecke erlaubt.

11. Mit einem Rad versehene Schaufel (10) nach einem der Ansprüche 1 bis 10, weiterhin umfassend: Hilfsmittel zum selektiven Befestigen des Griffs an dem Rahmen (110) in zwei oder mehreren unterschiedlichen Griffstellen.

12. Mit einem Rad versehene Schaufel (10) nach einem der Ansprüche 1 bis 11, wobei weiterhin der mittlere Abschnitt erste und zweite, im Allgemeinen ununterbrochene Abschnitte einschließt, durch deren Zusammenwirken ein im Allgemeinen V-förmiges Profil festgelegt wird und wobei sich die Position der Achse in etwa am Schnittpunkt der ersten und zweiten im Allgemeinen ununterbrochenen Abschnitte befindet, durch deren Zusammenwirken das im Allgemeinen V-förmige Profil festgelegt wird.

13. Mit einem Rad versehene Schaufel (10) nach einem der Ansprüche 1 bis 12, wobei der mittlere Abschnitt erste und zweite im Allgemeinen ununterbrochen verlaufende Abschnitte einschließt, durch deren Zusammenwirken ein im Allgemeinen V-förmiges Profil festgelegt wird, und wobei die mit einem Rad versehene Schaufel (10) eine Vielzahl an Positionen zur Befestigung der Achse einschließt, von denen zumindest eine Position in etwa den Schnittpunkt der ersten und zweiten im Allgemeinen ununterbrochen verlaufenden Abschnitte bildet, durch deren Zusammenwirken ein im Allgemeinen V-förmiges Profil festgelegt wird.

14. Mit einem Rad versehene Schaufel (10) nach einem der Ansprüche 1 bis 13, wobei die Achse (190) einen röhrenförmigen, zwei Endabschnitte aufweisenden Körper mit zumindest einer Feder an jedem Endabschnitt des röhrenförmigen Körpers umfasst, wobei die Federn zusammengedrückt werden, wenn der Griff im Allgemeinen derart nach unten gedrückt wird, dass durch das Zusammendrücken der Federn eine Rückschlagwirkung entsteht.

15. Mit einem Rad versehene Schaufel (10) nach einem der Ansprüche 1 bis 14, wobei der mittlere Abschnitt an der Achse (190) befestigt ist, und wobei der mittlere Abschnitt im Allgemeinen eine "S-Form" aufweist, die durch einen im unteren Abschnitt enthaltenen Winkel Φ und einen im oberen Abschnitt enthaltenen Winkel Φ festgelegt ist, wobei der im unteren Abschnitt enthaltene Winkel Φ zwischen etwa 80° und 165° beträgt und wobei der im oberen Abschnitt enthaltene Winkel zwischen etwa 80° und 120° beträgt.

16. Mit einem Rad versehene Schaufel (10) nach einem der Ansprüche 1 bis 15, wobei der Griff (133) im Allgemeinen T-förmig ist und wobei der Griff (133) mit einer abgekröpften Befestigungsplatte an dem Rahmen (110) befestigt ist.

17. Mit einem Rad versehene Schaufel (10) nach Anspruch 8, wobei die herausziehbare und drehbare Verbindung des Griffs (133) eine Befestigung an dem Rahmen (110) zumindest in einer ersten Griffrichtung bzw. in einer zweiten Griffrichtung um 180° verdreht zur ersten Griffrichtung erlaubt.

18. Mit einem Rad versehene Schaufel (10) nach Anspruch 1, wobei die mit einem Rad versehene Schaufel (10) so ausgestaltet ist, dass das Hebelverhältnis angepasst werden kann.

19. Mit einem Rad versehene Schaufel (10) nach einem der Ansprüche 1 bis 18, wobei die Achse (190) höher ist als die Position, an der die Schaufel befestigt ist, wenn sich das Schaufelblatt (245) und das Rad (170) auf ein und derselben horizontalen Ebene befinden.

20. Mit einem Rad versehene Schaufel (10) nach einem der Ansprüche 1 bis 19, wobei die Achse (190) höher ist als das Schaufelblatt (245), wenn sich das Schaufelblatt (245) und das Rad (170) auf ein und derselben horizontalen Ebene befinden.

## Revendications

1. Pelle à roue (10) comprenant
un assemblage de roue (100) comportant un axe (190) et une roue (170) ;
un cadre (110) comportant une partie supérieure, une partie inférieure et une partie centrale disposée de façon générale entre les parties supérieure et inférieure du cadre (110), la partie centrale avoisinant l'axe (190) de telle manière que l'axe (190) peut fonctionner comme un point d'appui autour duquel peut pivoter le cadre (100) ;
une poignée (133) liée à la partie supérieure du cadre et
une palette de pelle (245) liée à la partie inférieure du cadre,
**caractérisée en ce que**
ladite partie inférieure du cadre est plus basse que l'axe (190) quand la palette de pelle (245) et la roue (170) sont sur la même surface horizontale ;
la roue (170) a un diamètre extérieur compris entre environ 76 à 91 cm (30 à 36 inches) et
l'assemblage de roue (100), le cadre (110), la poignée (133) et la palette de pelle (245) sont conçus pour coopérer de manière à permettre à la pelle à roue (10) de projeter la neige de façon générale vers le haut et vers l'avant de la palette de pelle (245) en réponse à une force suffisante appliquée à la poignée pour faire pivoter le cadre (100) par rapport à l'axe (190) avec un effet de recul produit par le point d'appui sur l'axe (190).

2. Pelle à roue (10) selon la revendication 1, dans laquelle la pelle à roue (10) comprend au moins une configuration de fixation de poignée et une pluralité de points de montage de l'axe, pour régler sélectivement un taux de levier de la pelle à roue (10).

3. Pelle à roue (10) selon la revendication 1 ou la revendication 2, dans laquelle la partie centrale comprend une première et une deuxième partie de façon générale droites qui définissent conjointement un profil de façon générale en V et dans laquelle la deuxième partie de façon générale droite est de façon générale horizontale quand la palette de pelle est abaissée vers la surface horizontale qui supporte la pelle à roue (10).

4. Pelle à roue (10) selon l'une des revendications 1 à 3, dans laquelle la partie supérieure du cadre (110) est incurvée de telle manière que la partie supérieure incurvée et la partie centrale définissent conjointement un profil de façon générale en S.

5. Pelle à roue (10) selon l'une des revendications 1 à 4, dans laquelle la partie centrale comprend une première et une deuxième partie de façon générale droites qui définissent conjointement un profil de façon générale en V et dans laquelle la pelle à roue (10) est configurée pour que l'axe puisse être réglé longitudinalement par rapport à la deuxième partie de façon générale droite du cadre (110) de façon à permettre un réglage sélectif par rapport à la position longitudinale de l'axe sans modifier significativement la hauteur de l'axe par rapport à la surface horizontale qui supporte la pelle à roue (10).

6. Pelle à roue (10) selon l'une des revendications 1 à 5, comprenant en outre des moyens pour régler sélectivement la position longitudinale de l'axe sans modifier significativement la hauteur de l'axe par rapport à une surface horizontale qui supporte la pelle à roue (10).

7. Pelle à roue (10) selon l'une des revendications 1 à 6, comprenant en outre au moins une réception d'axe comportant une pluralité de cavités réceptrices d'axe, les cavités réceptrices d'axe fournissant une pluralité de points de montage différents de l'axe par rapport au cadre (110).

8. Pelle à roue (10) selon l'une des revendications 1 à 7, dans laquelle la position de la poignée peut être réglée par une liaison extensible et tournante vis-à-vis du cadre (110) de telle manière que la poignée (133) peut être sortie par coulissement, rentrée par coulissement et tournée par rapport au cadre (110) pour une fixation au cadre (110) selon au moins deux positions différentes de poignée, la liaison extensible et tournante permettant un réglage sélectif d'au moins une caractéristique ou plus de la pelle à roue (10) : hauteur de poignée, longueur de poignée et taux de levier, et permet par conséquent d'adapter la pelle à roue (10) à un utilisateur particulier ou à des conditions particulières.

9. Pelle à roue (10) selon l'une des revendications 1 à 8, dans laquelle la poignée (133) peut être réglée par une liaison télescopique coulissante au cadre (110) telle que la poignée peut être allongée par coulissement ou être rétractée par coulissement par rapport au cadre (110) pour une fixation au cadre (110) selon au moins deux positions différentes de poignée, la liaison (115) télescopique extensible permettant un réglage sélectif d'au moins une caractéristique de la pelle à roue (10) : hauteur de poignée, longueur de poignée et taux de levier, et permet par conséquent d'adapter la pelle à roue (10) à un utilisateur particulier ou à des conditions particulières.

10. Pelle à roue (10) selon l'une des revendications 1 à 9, dans laquelle la poignée (133) peut être réglée par une liaison tournante au cadre (110) telle que la poignée peut être tournée par rapport au cadre (110) et fixée au cadre (110) selon au moins une première orientation de poignée ou une deuxième orientation de poignée tournée de cent quatre-vingts degrés par rapport à la première orientation de poignée, la liaison tournante permettant un réglage sélectif d'au moins une caractéristique de la pelle à roue (10) : position de poignée et taux de levier, et permet par conséquent d'adapter la pelle à roue (10) à un utilisateur particulier ou à des conditions particulières.

11. Pelle à roue (10) selon l'une des revendications 1 à 10, comprenant en outre des moyens pour fixer sélectivement la poignée au cadre (110) selon deux positions différentes de poignée ou plus.

12. Pelle à roue (10) selon l'une des revendications 1 à 11, dans laquelle la partie centrale comprend une première et une deuxième partie de façon générale droites qui définissent conjointement un profil de façon générale en V et dans laquelle l'axe se trouve approximativement à l'intersection de la première et de la deuxième partie de façon générale droites qui définissent conjointement le profil de façon générale en V.

13. Pelle à roue (10) selon l'une des revendications 1 à 12, dans laquelle la partie centrale comprend une première et une deuxième partie de façon générale droites qui définissent conjointement un profil de façon générale en V et dans laquelle la pelle à roue (10) comprend une pluralité de points de montage de l'axe dont au moins l'un est approximativement à l'intersection de la première et de la deuxième partie de façon générale droites qui définissent conjointement le profil de façon générale en V.

14. Pelle à roue (10) selon l'une des revendications 1 à 13, dans laquelle l'axe (190) comprend un corps tubulaire à deux parties terminales avec au moins un ressort à chacune desdites parties terminales du corps tubulaire, les ressorts étant comprimés quand la poignée est poussée de façon générale vers le bas de sorte que la compression des ressorts provoque un effet de recul.

15. Pelle à roue (10) selon l'une des revendications 1 à 14, dans laquelle la partie centrale est fixée à l'axe (190) et dans laquelle la partie centrale présente en général une « forme de S » définie par un angle Φ dans la partie inférieure et un angle Φ' dans la partie supérieure, l'angle Φ dans la partie inférieure étant compris entre quatre-vingts degrés et cent soixante cinq degrés et l'angle Φ' dans la partie supérieure étant compris entre quatre-vingts degrés et cent-vingts degrés.

16. Pelle à roue (10) selon l'une des revendications 1 à 15, dans laquelle la poignée (133) a en général une forme de T et dans laquelle la poignée (133) est fixée au cadre (110) à l'aide d'une plaque de fixation coudée.

17. Pelle à roue (10) selon la revendication 8, dans laquelle la liaison extensible et tournante [permet] de fixer la poignée (133) au cadre (110) selon au moins une première orientation de poignée ou une deuxième orientation de poignée tournée de cent-quatre-vingts degrés par rapport à la première orientation de poignée.

18. Pelle à roue (10) selon la revendication 1, dans laquelle la pelle à roue (10) est configurée de telle manière qu'il est possible de régler le taux de levier.

19. Pelle à roue (10) selon l'une des revendications 1 à 18, dans laquelle l'axe (190) est plus haut que le point de fixation de palette quand la palette de pelle (245) et la roue (170) sont sur la même surface horizontale.

20. Pelle à roue (10) selon l'une des revendications 1 à 19, dans laquelle l'axe (190) est plus haut que la palette de pelle (245) quand la palette de pelle (245) et la roue (170) sont sur la même surface horizontale.
